# EUROPEAN PATENT SPECIFICATION

(11) **EP 2 666 064 B1**
(45) Date of publication and mention of the grant of the patent: **10.12.2014**
(21) Application number: 11701356.5
(22) Date of filing: 21.01.2011
(51) Int. Cl.: G05B 19/42, B25J 9/16, G05B 19/05

(54) **METHOD FOR TEACHING A ROBOT MOVEMENT**
VERFAHREN ZUM LEHREN EINER ROBOTERBEWEGUNG
MÉTHODE D'APPRENTISSAGE D'UN MOUVEMENT DE ROBOT

(43) Date of publication of application: 27.11.2013
(73) Proprietor: ABB AG, 68309 Mannheim (DE)
(72) Inventor: BECKER, Oliver, 69198 Schriesheim (DE); RÜDELE, Hartmut, 68526 Ladenburg (DE); DAI, Fan, 64673 Zwingenberg (DE)
(86) International application number: PCT/EP2011/000244
(87) International publication number: WO 2012/097835

(56) References cited:
- JP-A- 7 078 021
- US-A1- 2010 063 608
- US-B1- 6 332 101
- MARCELLO BONFE ET AL: "PLC-based control of a robot manipulator with closed kinematic chain", ROBOTICS AND AUTOMATION, 2009. ICRA '09. IEEE INTERNATIONAL CONFERENCE ON, IEEE, PISCATAWAY, NJ, USA, 12 May 2009 (2009-05-12), pages 1262-1267, XP031509515, ISBN: 978-1-4244-2788-8
- "Branchenlösung", INTERNET CITATION, September 2004 (2004-09), XP002329035, Retrieved from the Internet: URL:http://www.keba.com/unternem/de/presse /pdf/0409_Factory-pdf [retrieved on 2005-05-23]

## Description

The invention relates to a method for teaching a robot movement.

It is known, that robots are widely used in industrial applications, such as material handling, machine tending, assembly of parts, arc welding or painting of vehicles. Usually, several robots are working together along a common production line, whereas each robot is foreseen for a certain production step. The overall control of those robots is typically realized by a system, which is based on a programmable logic controller (PLC). The programmable logic controller coordinates the triggering of the working sequences of the different robots dependent for example on the position of a conveyor system, wherewith a workpiece to be assembled is transported along the different working positions of the robots. The programming of a PLC is standardized in a wider manner, for example by IEC 61131, so a person who is skilled in PLC programming is able to operate a wide range of different PLC controlled production lines concerning this issue.

A robot comprises normally a robot manipulator with several degrees of freedom in movement, for example six or seven, whereas at the end of the robot manipulator typically an end effector like a gripper or another tool like a welding gun is foreseen. A robot manipulator with at least six degrees of freedom in movement is able to position a belonging tool within each coordinate of its working range in each orientation. Thus, a coordinate along a movement path of the robot tool requires typically six values, three for the belonging coordinate and three for the belonging orientation. The working range of a robot depends on the robot and might be for example within a radius of 1 m to 3m around the belonging robot base.

The movement of the robot is typically controlled by a dedicated robot controller, which comprises on the one side a kind of computer system and on the other side several amplifiers for the belonging drives of the robot. Typically each degree of freedom in movement requires a dedicated drive such as an electrical motor. The desired movement of the robot is normally contained within a robot program, which is stored on the computer system of the robot controller. The movement path is composed by a sequence of movement sections inbetween given coordinates, which are specified within the robot program. Thus a robot program might contain commands with the content *"linear move from current coordinate to coordinate [x1, x2, x3, o1, o2, o3] with speed [z]"* or *"linear move from current coordinate to current coordinate* + *delta [x1, x2, x3, o1, o2, o3] with speed [z]".* The robot controller calculates the belonging control signals for the different motors, so that the tip of the robot manipulator executes the desired motion. It is also thinkable, that two or more robots are controlled by a common robot controller.

Thus, the programming of a robot is a rather time consuming task and requires special knowledge. Especially the fine-teaching of a coordinate of a movement path requires special knowledge of the robot to be teached. Normally a robot program is either prepared or provided by using an external simulation program such as Robot Studio or RobCad. The provided movement path normally has to be fine tuned at least in part while commissioning the production line but also to compensate some changes during normal production. In this case the robot is set into a teach mode, whereas the robot is physically moveable along the desired default movement path in a slow motion so that no risk for the operator will rise. At each coordinate of the movement path the operator has the option, to refine or specify the current default coordinate. For a paint robot for example the orientation of the paint applicator is of significant importance for the paint result, whereas the required orientation is rather difficult to estimate during an offline simulation or generation of a paint program. Thus especially the orientations of selected coordinates have to be manually fine-tuned by a paint expert while moving the robot coordinate by coordinate along its desired movement path over a real object to be painted.

A robot typically is manually controllable by using a so called teach pendant. Such a device comprises normally a display and a kind of joystick wherewith the robot position is adjustable. Since each robot manufacturer typically provides a different programming language for his robots, the programming effort also increases if different kinds of robots are installed within the same production line of a manufacturing plant.

From the publication "PLC-based control of a robot manipulator with closed kinematic chain", ROBOTICS AUTOMATION, 2009, ICRA'09, IEEE INTERNATIONAL CONFERENCE ON, IEEE, PISCATAWAY, NJ, USA, 12. May 2009, pages 1262-1267, XP031509515, ISBN: 978-1-4244-2788-8, the design and implementation of a robot control system on a hardware platform based on a Programmable Logic Controller (PLC) is known.

In the document "Branchenlösungen" retrieved from the internet URL on September 2004, XP002329035: "http://www.keba.com/unteternem/de/presse/pdf/0409 Factorv- pdf" an integrated robotic with a teach-in program is disclosed.

Disadvantageously within this state of the art is, that the operation of such a production line requires at least two different control systems, on the one side the PLC system for the overall control and on the other sides the control systems for the robots of the different manufacturers, which all have to be operated by the same operating staff of the production line. This increases the effort for programming the robots of the production line.

Based on this state of the art it is the objective of the invention to provide a method for teaching a robot, which requires less effort during commissioning or maintenance of the belonging robot programs.

This problem is solved by a method for teaching a robot movement using a system comprising a robot, a robot controller with at least an automatic mode and a teach mode, a programmable logic controller which is connected to the robot controller, whereas the programmable logic controller comprises means for storing coordinate tuples in a teach position table, which coordinate tuples each are describing at least a default coordinate of a movement path of the robot, whereas each coordinate tuple is dispatchable by a dedicated PLC function to the robot controller, whereas in the teach mode optionally an interaction process for manually specifying the coordinate value is triggered on the robot controller by dispatching the coordinate tuple and whereas the manually specified coordinate value is provideable to and storable back on the programmable logic controller, the method comprising the following steps:
- dispatching the coordinate tuple to the robot controller using a PLC function,
- triggering simultaneously an interaction process on the robot controller for manually fine tuning the default coordinate value into the specified coordinate value,
- automatic movement of the robot to the default coordinate value by executing the robot program in the robot controller,
- manually fine tuning the default coordinate value by using the interaction process,
- writing back the specified coordinate value to the teach position table of the programmable logic controller by using a PLC function,
- optionally dispatching of a subsequent coordinate tuple and redoing this procedure.

The basic idea of the invention consists in using the PLC functionality of a programmable logic controller for commanding and teaching the robot Thus the coordinates of the movement path are provided by the programmable logic controller and dispatched coordinate by coordinate by a PLC function to the robot controller. After receiving the belonging coordinate the robot performs typically a movement from its actual position to the subsequent provided coordinate. According to the invention this proceeding is used as well for the automatic mode of the robot - wherein the robot executes the desired movement program under production conditions without a possibility to change something of the robot program - as for the teach mode. In the teach mode the robot is in a preferably intrinsically save slow motion state whereas each coordinate can be refined respectively specified manually by using a belonging interaction procedure typically provided by the teach pendant.

The relevant coordinates for the robot movement are stored in and provided by the programmable logic controller, which has the overall control also over the teach process. Thus in the teach mode the dispatching of a coordinate tuple respectively the receiving of the coordinate tuple by the robot controller initializes optionally the interaction process for the belonging coordinate, which is a function of the robot respectively the robot controller. The specified coordinate is provided back to the programmable logic controller, since the relevant coordinates for the movement path are stored in and provided by its teach position table. In the easiest case the default coordinate values stored in the teach position table are overwritten with the specified coordinate values. When the robot executes the robot program the next time in the automatic mode, he will move along the specified coordinates.

Since the triggering of the process of specifying the coordinates is controlled by the programmable logic controller, the operator needs no further knowledge how to store the specified coordinates into the robot program or how to move to the next coordinate. The only required robot specific knowledge is related to the fine-tuning respectively specifying of a default coordinate. Thus the process for teaching a robot movement is simplified in an advantageous way.

The coordinates are stored in a coordinate tuple, which comprises at least a default coordinate of the movement path, whereas a coordinate itself typically comprises at least six coordinate values, three for the position in XYZ direction and three for the belonging orientation. The use of other coordinate systems such as cylinder coordinates or such is of course also possible. Optionally a coordinate might contain information about the desired movement speed, the joint configuration parameters, and so on.

In a further embodiment of the method according to the invention the coordinate tuple dispatched to the robot controller contains a default coordinate with no value, but a numeric identifier, whereas the actual robot position is set to the default position. This is useful for example, if the teach position table is empty since no previous simulation or program generation has taken place before. In this case the default coordinate is empty and has not to be sent to the robot controller, whereas of course the possibility to store values of the default coordinate in the teach position table has to be provided for writing back the specified coordinate. Thus the interaction process for manually specification of the default coordinate might be triggered by dispatching the alphanumeric identifier.

In a variant of the invention a coordinate tuple comprises an alternative teachable coordinate value, where the manually specified coordinate value is stored in. Hence the coordinates of the default movement path are not overwritten by the specified coordinates. This is useful especially for an iterative fine-tuning, where the same coordinate is specified several times by using the trial and error method for example.

According to a further embodiment of the invention a coordinate tuple comprises an alphanumeric identifier, which is dispatched together with the residual coordinate tuple to the robot controller. This might be for example a name or such, for example "top point", which is displayed to the operator before or during the teaching process. This additional information will be helpful to avoid errors or faults while manually teaching. But this identifier can also be used to provide some additional information to the robot controller, such as the kind of desired movement, for example a linear movement or a movement along a curved path. But this identifier also might contain information, whether a manually specification of the belonging default coordinate has to be triggered.

Following another variant of the invention a coordinate tuple comprises a numerical identifier. The purpose of it corresponds basically to the alphanumeric identifier, whereas the automatic interpretation by the robot controller receiving this information is easier to realize.

According to another embodiment of the invention the robot controller is foreseen to set the actual position of the robot as default coordinate value to be specified if the default coordinate has no value. This is useful for example, if the teach position table is empty since no previous simulation or program generation has taken place before In this case the default coordinate is empty and has not to be sent to the robot controller, whereas of course the possibility to store values of the default coordinate in the teach position table has to be provided for writing back the specified coordinate. Thus the interaction process for manually specification of the default coordinate might be triggered by dispatching the alphanumeric identifier.

According to a preferred embodiment of the invention the programmable logic controller comprises an interface for importing coordinate values from a movement program and storing them into the teach position table. This enables the import of an externally generated movement program, which preferably should be written in an IEC61131-3 language. This is the standard for PLC applications. Of course the interface might be foreseen to import other robot languages or output data from CAD tools.

According to another embodiment of the invention a coordinate tuple is created and written into the teach position table by instantiating a PLC function that defines a robot motion command. Those PLC functions might be provided in a library of the programmable logic controller so that the user is able to compose the desired movement path step by step by using the PLC functions, which each are representing a certain segment of the desired movement path to be programmed.

According to a preferred embodiment of the invention several subsequent coordinate tuples of a movement path are sequentially dispatched to the robot controller. This enables as well in the automatic mode as in the teach mode the execution of a motion along the full movement path.

Following another embodiment of the invention a subsequent coordinate tuple is not dispatched before the robot has reached the position of the proceeding coordinate tuple. According to a further variant of the invention a subsequent coordinate tuple is not dispatched before an optionally triggered interaction process for manually specifying the default coordinate has been finished. Both is useful especially for the teach mode wherein the coordinates of the movement path are reached respectively specified coordinate by coordinate. This function might be realized by sequentially triggering the execution of a subsequent PLC function by an output of the proceeding PLC function. Thus the information, that a coordinate has been specified is provided to the programmable logic controller and influences the output of the belonging PLC function. When the output has changed and indicates, that the function has been executed, the subsequent movement block will be triggered by this output.

According to a preferred embodiment of the invention the robot and robot controller are foreseen to execute a robot movement in the automatic mode without interaction process. In this case the data of the movement path respectively the coordinate tupies are sequentially dispatched to the robot controller by the programmable logic controller. It might be useful, that the robot controller comprises a motion queue for storing a sequence of dispatched coordinate tuples.

According to a preferred embodiment of the invention the complete teach position table of the programmable logic controller is dispatched to the robot controller and a certain coordinate tuple to be specified is selected therefrom. This enables the re-teaching of a single coordinate of a longer movement path without passing the other coordinates. In this case it has to be assumed, that the movement from the preceding coordinate and the movement to the subsequent coordinate does not cause any collision. Otherwise it is of course also possible to select a group of subsequent coordinates for re-teaching.

Further advantageous embodiments of the invention are mentioned in the dependent claims.

The invention will now be further explained by means of an exemplary embodiment and with reference to the accompanying drawings, in which:
Figure 1 shows an exemplary function block of a programmable logic controller (PLC),
Figure 2 shows an exemplary system for teaching a robot by PLC and
Figure 3 shows an exemplary robot with movement path.

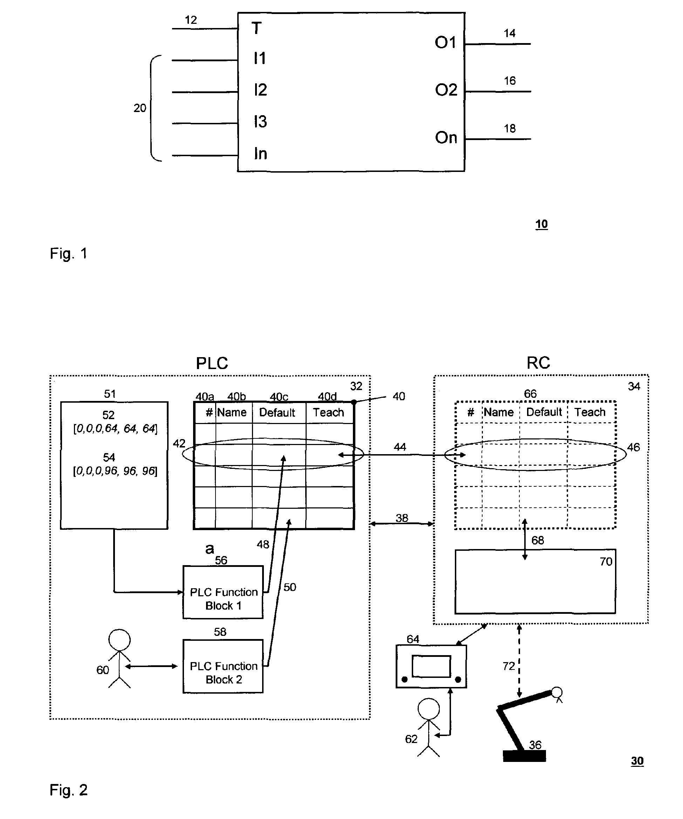

Figure 1 shows a function block 10, comprising an input 12 (in the Fig. referenced with "T") for triggering the execution of a belonging function, further inputs 20 (in the Fig. referenced with "I1", "I2", "I3", "In") and three outputs 14, 16, 18 (in the Fig. referenced with "O1 ", "O2", "O3"). The function block describes a functional relationship between the inputs 20 and the outputs 14, 16, 18, which all are foreseen to encode either the status TRUE ort FALSE. The first output 14 represents the first state, namely that the function block has been activated, the second output 16 represents the second state, namely that the execution of the belonging movement segment has been started whereas the third output represents the third state, namely that the execution of the belonging movement segment has been finished. Such a function block is as well realizable as software function as with a dedicated hardware.

Fig. 2 shows an exemplary system 30 for teaching a robot 36 by a programmable logic controller 32. The programmable logic controller 32 is realized by software modules and not by a dedicated hardware and comprises means for storing a teach position table 40. The teach position table enables the storing of several coordinate tupies 42, which themselves comprise a numerical identifier 40a, an alphanumerical identifier 40b, a default position coordinate 40c and a specified coordinate 40d. Preferably a coordinate comprises six values which allow the specification of any coordinate in any orientation.

It is either possible to import coordinate data 52, 54 from a movement program 51 from extern, which has been generated for example offline. Preferably the movement program 51 is written according to the IEC 61131-3 standard, which is related to PLC applications. Thus the import of the coordinate data 52, 54 and the writing 48 into the teach position table 40 by using a PLC function 56 is realizable without major adaptation effort within the belonging function block. It is also possible that a user 60 manually interacts with the programmable logic controller 32 and selects one or more function blocks 58 out of library, whereas a function block describes a coordinate of a movement path respectively a segment of the movement path including also additional information such as desired movement speed for example.

The programmable logic controller sequentially dispatches 44 coordinate tuples 42 to the robot controller 34, which are connected together by a data connection 38, for example a fieldbus. The dispatched coordinate tuple 46 might be a copy of the original coordinate tuple 42, but it is also thinkable, that only some tuple data are dispatched. The robot controller 34 comprises means for executing a robot program 70, which is foreseen to incorporate 68 the actually dispatched coordinate tuples 46 into the robot program 70 execution. The robot controller 34 is connected to the robot 36 by a connection 72.

The receiving of a coordinate tuple 46 optionally triggers a process on the robot controller 34 for specifying respectively fine tuning the belonging default coordinate values. This is usually done manually by the user 62, which interacts with a device for manual interaction 64 respectively a teach pendant. The triggering might be initiated for example by the numerical or alphanumerical identifier.

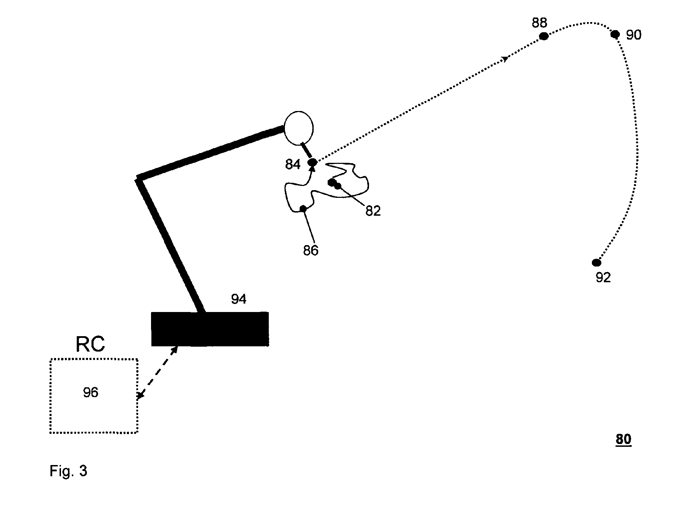

Figure 3 shows an exemplary robot with movement path in a sketch 80. A robot 94 is connected to a robot controller 96, which is connected to a non shown programmable logic controller. According to the intended motion the robot 94 will move along a movement path defined by the coordinates 84, 88, 90, 92. Each coordinate 84, 88, 90, 92 has to be assumed as comprising six coordinate values, three for the coordinates in the XYZ directions and three for the belonging orientation. Of course it is also possible to command a robot with less degrees of freedom in movement by a programmable logic controller according to the invention. A process for specifying a coordinate is shown by the path 86. The initial default coordinate dispatched from the programmable logic controller to the robot controller 96 is indicated with the reference number 82. The process for manually specifying the default coordinate 82 is initiated by receiving the coordinate tuple by the robot controller. The specifying itself is based on a procedure integrated within the robot controller 96 and typically takes use of a teach pendant. In this case the robot is moved along the variable path 86 to its specified position 84. After reaching the specified position 84 the control is given back to the programmable logic controller and the values of the specified coordinate 84 are written into the teach position table, whereas the robot is in the teach mode during the whole time. Afterwards the robot 94 respectively the robot controller 96 are switched into the automatic mode and the robot moves along the movement path 84, 88, 90, 92 according to values of the currently dispatched coordinate tuples.

### List of reference signs

- 10: exemplary function block of a programmable logic controller (PLC)
- 12: trigger input of first function block
- 14: first output of first function block
- 16: second output of first function block
- 18: third output of first function block
- 20: further inputs of first function block
- 30: exemplary system for teaching a robot by PLC
- 32: programmable logic controller
- 34: first robot controller
- 36: first robot
- 38: connection
- 40: teach position table
- 40a: numerical identifier
- 40b: alphanumerical identifier
- 40c: default coordinate
- 40d: specified coordinate
- 42: first coordinate tuple
- 44: dispatching of first coordinate tuple to robot controller
- 46: dispatched coordinate tuple
- 48: writing of first coordinate data
- 50: writing of second coordinate data
- 51: movement program
- 52: first coordinate
- 54: second coordinate
- 56: first PLC block
- 58: second PLC block
- 60: first user
- 62: second user
- 64: device for manual interaction
- 66: copy of teach position table
- 68: access of robot program on copy of teach position table
- 70: robot program
- 72: connection robot controller to robot
- 80: exemplary robot with movement path
- 82: first coordinate as default value
- 84: first coordinate of movement path as specified value
- 86: exemplary movement path of robot during interaction process
- 88: second coordinate of movement path
- 90: third coordinate of movement path
- 92: forth coordinate of movement path
- 94: second robot
- 96: second robot controller

## Claims

1. Method for teaching a robot movement (84 - 88 - 90 - 92) using a system comprising
. a robot (36, 94),
. a robot controller (34, 96) with at least an automatic mode and a teach mode,
. a programmable logic controller (PLC) (32) which is connected (38) to the robot controller (34, 96),
whereas the programmable logic controller (32) comprises means for storing coordinate tuples (42) in a teach position table (40), which coordinate tuples (42) each describe at least a default coordinate (40c) of a movement path (84 - 88 - 90 - 92) of the robot (36, 94), whereas each coordinate tuple (42) is dispatchable (44) by a dedicated PLC function (10, 56, 58) to the robot controller (34, 96), whereas in the teach mode optionally an interaction process for manually specifying the default coordinate value is triggered on the robot controller (34, 96) by dispatching the coordinate tuple (42) and whereas the manually specified coordinate value (84) is provideable to and storable back on the programmable logic controller (32), the method **characterized in that** it comprises the following steps:
. dispatching (44) the coordinate tuple (42) to the robot controller (34, 96) using a PLC function (10, 56, 58),
• triggering simultaneously an interaction process on the robot controller (34, 96) for manually fine tuning (86) the default coordinate (82) value into the specified coordinate (84) value,
• automatic movement of the robot to the default coordinate (82) value by executing the robot program in said robot controller,
• manually fine tuning (86) the default coordinate (82) value by using the interaction process,
. writing back the specified coordinate (84) value to the teach position table (40) of the programmable logic controller (32) by using a PLC function (10, 56, 58), optionally dispatching (44) of a subsequent coordinate tuple (40) and redoing this procedure.

2. Method for teaching a robot movement according to claim 1 , whereas the coordinate tuple (42) dispatched to the robot controller (34, 96) contains a default coordinate (40c) with no value, but a numeric (40a) or alphanumeric (40b) identifier, whereas the actual robot position is set to the default position.

3. Method according to claim 1 or 2, whereas a coordinate tuple (42) comprises an alternative teachable coordinate value (40d), where the manually specified coordinate value (84) is stored in.

4. Method according to any of the previous claims, whereas a coordinate tuple (42) comprises an alphanumeric identifier (40b).

5. Method according to any of the previous claims, whereas a coordinate tuple (42) comprises a numerical identifier (40a).

6. Method according to claim 4 or claim 5, whereas the robot controller (34, 96) is foreseen to set the actual position of the robot (36, 94) as default coordinate value to be specified if the default coordinate (40c) has no value.

7. Method according to any of the previous claims, whereas the programmable logic controller (32) comprises an interface for importing coordinate values (52, 54) from a movement program (51) and storing (48) them into the teach position table (40).

8. Method according to any of the previous claims, whereas a coordinate tuple (42) is created and written (50) into the teach position table (40) by instantiating a PLC function (58) that defines a robot motion command.

9. Method according to any of the previous claims, whereas several subsequent coordinate tuples of a movement path are sequentially dispatched to the robot controller.

10. Method according to claim 9, whereas a subsequent coordinate tuple (42) is not dispatched (44) before the robot (36, 94) has reached the position of the preceding coordinate tuple.

11. Method according to claim 9 or 10, whereas a subsequent coordinate tuple (42) is not dispatched (44) before an optionally triggered interaction process for manually specifying the default coordinate (82) has been finished.

12. Method according to claim 11, whereas the robot (36, 94) and robot controller (34, 96) are foreseen to execute a robot movement (84 - 88 - 90 - 92) in the automatic mode without interaction process.

13. Method according to any of the previous claims, whereas the complete teach position table (40) is dispatched to the robot controller and whereas a certain coordinate tuple (42) to be specified is manually selected.

## Patentansprüche

1. Verfahren zum Einlernen einer Roboterbewegung (84 - 88 - 90 - 92) unter Verwendung eines Systems, das Folgendes umfasst:
einen Roboter (36, 94),
eine Robotersteuereinheit (34, 96) mit mindestens einem automatischen Modus und einem Einlernmodus,
eine speicherprogrammierbare Steuerung (PLC) (32), die mit der Robotersteuereinheit (34, 96) verbunden ist (38),
wobei die speicherprogrammierbare Steuerung (32) Mittel zum Speichern von Koordinatentupeln (42) in einer Einlernpositionstabelle (40) umfasst, wovon jedes Koordinatentupel (42) mindestens eine Standardkoordinate (40c) eines Bewegungswegs (84- 88 - 90 - 92) des Roboters (36, 94) beschreiben, wobei jedes Koordinatentupel (42) durch eine zugeordnete PLC-Funktion (10, 56, 58) an die Steuereinheit (34, 96) versendbar ist (44), wobei in dem Einlernmodus ein Wechselwirkungsprozess zum manuellen Spezifizieren des Standardkoordinatenwerts optional auf der Robotersteuereinheit (34, 96) durch das Senden des Koordinatentupels (42) ausgelöst wird und wobei der manuell spezifizierte Koordinatenwert (84) an die speicherprogrammierbare Steuerung (32) lieferbar und in ihr zurückspeicherbar ist, wobei das Verfahren **dadurch gekennzeichnet ist, dass** es die folgenden Schritte umfasst:
Senden (44) des Koordinatentupels (42) unter Verwendung einer PLC-Funktion (10, 56, 58) an die Roboter-Steuereinheit (34, 96),
gleichzeitiges Auslösen eines Wechselwirkungsprozesses auf der Robotersteuereinheit (34, 96) zum manuellen Feineinstellen (86) des Werts der Standardkoordinate (82) in den Wert der spezifizierten Koordinate (84),
automatisches Bewegen des Roboters zu dem Wert der Standardkoordinate (82) durch Ausführen des Roboterprogramms in der Robotersteuereinheit,
manuelles Feineinstellen (86) des Werts der Standardkoordinate (82) durch Verwenden des Wechselwirkungsprozesses,
Zurückschreiben des Werts der spezifizierten Koordinate (84) in die Einlernpositionstabelle (40) der speicherprogrammierbaren Steuerung (32) durch Verwenden einer PLC-Funktion (10, 56, 58),
optionales Senden (44) eines nachfolgenden Koordinatentupels (40) und Wiederholen dieser Prozedur.

2. Verfahren zum Einlernen einer Roboterbewegung nach Anspruch 1, wobei das Koordinatentupel (42), das an die Robotersteuereinheit (34, 96) gesendet wird, eine Standardkoordinate (40c) mit keinem Wert, sondern einem numerischen (40a) oder alphanumerischen (40b) Bezeichner enthält, wobei die tatsächliche Roboterposition auf die Standardposition eingestellt ist.

3. Verfahren nach Anspruch 1 oder 2, wobei ein Koordinatentupel (42) einen alternativen einlernbaren Koordinatenwert (40d) umfasst, in der der manuell spezifizierte Koordinatenwert (84) gespeichert ist.

4. Verfahren nach einem der vorhergehenden Ansprüche, wobei ein Koordinatentupel (42) einen alphanumerischen Bezeichner (40b) umfasst.

5. Verfahren nach einem der vorhergehenden Ansprüche, wobei ein Koordinatentupel (42) einen numerischen Bezeichner (40a) umfasst.

6. Verfahren nach Anspruch 4 oder 5, wobei die Robotersteuereinheit (34, 96) vorgesehen ist, die tatsächliche Position des Roboters (36, 94) als Standardkoordinatenwert, der spezifiziert werden soll, einzustellen, wenn die Standardkoordinate (40c) keinen Wert hat.

7. Verfahren nach einem der vorhergehenden Ansprüche, wobei die speicherprogrammierbare Steuerung (32) eine Schnittstelle zum Importieren von Koordinatenwerten (52, 54) von einem Bewegungsprogramm (51) und deren Speichern (48) in der Einlernpositionstabelle (40) umfasst.

8. Verfahren nach einem der vorhergehenden Ansprüche, wobei ein Koordinatentupel (42) durch Realisieren einer PLC-Funktion (58), die einen Roboterbewegungsbefehl definiert, erzeugt und in die Einlernpositionstabelle (40) geschrieben wird (50).

9. Verfahren nach einem der vorhergehenden Ansprüche, wobei mehrere nachfolgende Koordinatentupel eines Bewegungswegs nacheinander an die Robotersteuereinheit gesendet werden.

10. Verfahren nach Anspruch 9, wobei ein nachfolgendes Koordinatentupel (42) nicht gesendet wird (44), bevor der Roboter (36, 94) die Position des vorhergehenden Koordinatentupels erreicht hat.

11. Verfahren nach Anspruch 9 oder 10, wobei ein nachfolgendes Koordinatentupel (42) nicht gesendet wird (44), bevor ein optional ausgelöster Wechselwirkungsprozess zum manuellen Spezifizieren der Standardkoordinate (82) beendet worden ist.

12. Verfahren nach Anspruch 11, wobei der Roboter (36, 94) und die Robotersteuereinheit (34, 96) vorgesehen sind, eine Roboterbewegung (84 - 88 - 90 - 92) im automatischen Modus ohne einen Wechselwirkungsprozess auszuführen.

13. Verfahren nach einem der vorhergehenden Ansprüche, wobei die vollständige Einlernpositionstabelle (40) an die Robotersteuereinheit gesendet wird und wobei ein bestimmtes Koordinatentupel (42), das spezifiziert werden soll, manuell ausgewählt wird.

## Revendications

1. Procédé d'apprentissage d'un mouvement de robot (84 - 88 - 90 - 92) au moyen d'un système comprenant :
- un robot (36, 94),
- une unité de commande de robot (34, 96) comportant au moins un mode automatique et un mode d'apprentissage,
- une unité de commande logique programmable (PLC) (32) reliée (38) à l'unité de commande de robot (34, 96), l'unité de commande logique programmable (32) comprenant des moyens pour stocker des tuples de coordonnées (42) dans une table de positions d'apprentissage (40), lesquels tuples de coordonnées (42) décrivent chacun au moins une coordonnée par défaut (40c) d'une trajectoire de mouvement (84 - 88 - 90 - 92) du robot (36, 94), chaque tuple de coordonnées (42) étant susceptible d'être transmis (44) à l'unité de commande de robot (34, 96) par une fonction dédiée (10, 56, 58) de la PLC, un processus d'interaction permettant de spécifier manuellement la valeur de la coordonnée par défaut étant, dans le mode d'apprentissage, facultativement déclenché sur l'unité de commande de robot (34, 96) en transmettant le tuple de coordonnées (42), et la valeur spécifiée manuellement de la coordonnée (84) étant susceptible d'être fournie à l'unité de commande logique programmable (32) et d'y être de nouveau enregistrée, le procédé étant **caractérisé en ce qu'**il comprend les étapes suivantes consistant à :
- transmettre (44) le tuple de coordonnées (42) à l'unité de commande de robot (34, 96) au moyen d'une fonction (10, 56, 58) de la PLC,
- déclencher simultanément un processus d'interaction sur l'unité de commande de robot (34, 96) pour effectuer manuellement un accord fin (86) de la valeur de la coordonnée par défaut (82) sur la valeur spécifiée de la coordonnée (84),
- déplacer automatiquement le robot jusqu'à la valeur de la coordonnée par défaut (86) en exécutant le programme de robot dans ladite unité de commande de robot,
- effectuer manuellement un accord fin (86) de la valeur de la coordonnée par défaut (82) en utilisant le processus d'interaction,
- réécrire la valeur spécifiée de la coordonnée (84) dans la table de positions d'apprentissage (40) de l'unité de commande logique programmable (32) en utilisant une fonction (10, 56, 58) de la PLC,
- transmettre (44) facultativement un tuple de coordonnées suivant (40) et recommencer cette procédure.

2. Procédé d'apprentissage d'un mouvement de robot selon la revendication 1, dans lequel le tuple de coordonnées (42) transmis à l'unité de commande de robot (34, 96) contient une coordonnée par défaut (40c) sans valeur mais un identificateur numérique (40a) ou alphanumérique (40b), la position effective du robot étant établie à la position par défaut.

3. Procédé selon la revendication 1 ou 2, dans lequel un tuple de coordonnées (42) comprend une autre valeur de coordonnées possible susceptible d'apprentissage (40d) où la valeur spécifiée manuellement de la coordonnée (84) est enregistrée.

4. Procédé selon l'une quelconque des revendications précédentes, dans lequel un tuple de coordonnées (42) comprend un identificateur alphanumérique (40b).

5. Procédé selon l'une quelconque des revendications précédentes, dans lequel un tuple de coordonnées (42) comprend un identificateur numérique (40a).

6. Procédé selon la revendication 4 ou 5, dans lequel l'unité de commande de robot (34, 96) est prévue pour établir la position effective du robot (36, 94) comme une valeur de coordonnée par défaut à spécifier si la coordonnée par défaut (40c) n'a pas de valeur.

7. Procédé selon l'une quelconque des revendications précédentes, dans lequel l'unité de commande logique programmable (32) comprend une interface permettant d'importer des valeurs de coordonnée (52, 54) depuis un programme de mouvement (51) et de les enregistrer (48) dans la table de positions d'apprentissage (40).

8. Procédé selon l'une quelconque des revendications précédentes, dans lequel un tuple de coordonnées (42) est créé et écrit (50) dans la table de positions d'apprentissage (40) en instanciant une fonction (58) de la PLC qui définit une commande de mouvement de robot.

9. Procédé selon l'une quelconque des revendications précédentes, dans lequel plusieurs tuples de coordonnées suivants d'une trajectoire de mouvement sont transmis séquentiellement à l'unité de commande de robot.

10. Procédé selon la revendication 9, dans lequel un tuple de coordonnées suivant (42) n'est transmis (44) que lorsque le robot (36, 94) a atteint la position du tuple de coordonnées précédent.

11. Procédé selon la revendication 9 ou 10, dans lequel un tuple de coordonnées suivant (42) n'est transmis (44) qu'à l'issue d'un processus d'interaction déclenché facultativement permettant de spécifier manuellement la coordonnée par défaut (82).

12. Procédé selon la revendication 11, dans lequel le robot (36, 94) et l'unité de commande de robot (34, 96) sont prévus pour exécuter un mouvement de robot (84 - 88 - 90 - 92) dans le mode automatique sans processus d'interaction.

13. Procédé selon l'une quelconque des revendications précédentes, dans lequel la table de positions d'apprentissage complète (40) est transmise à l'unité de commande de robot et dans lequel un certain tuple de coordonnées (42) à spécifier est sélectionnée manuellement.
